Europäisches Patentamt

European Patent Office

Office européen des brevets

(19)

(11) Publication number: **0 022 905**
**B1**

(12) **EUROPEAN PATENT SPECIFICATION**

(45) Date of publication of patent specification: **25.01.84**

(51) Int. Cl.³: **G 11 B 23/02**

(21) Application number: **80102581.8**

(22) Date of filing: **09.05.80**

(54) **Enclosed self-purging disk pack units.**

(30) Priority: **16.07.79 US 57631**

(43) Date of publication of application:
**28.01.81 Bulletin 81/4**

(45) Publication of the grant of the patent:
**25.01.84 Bulletin 84/4**

(84) Designated Contracting States:
**DE FR GB IT**

(56) References cited:
**DE - A - 2 737 333**
**FR - A - 2 052 505**
**GB - A - 2 024 495**
**US - A - 3 839 734**

**IBM TECHNICAL DISCLOSURE BULLETIN, vol.
10, no. 4, September 1967, page 450 New York,
U.S.A. D.J. CRESSWELL et al.: "Magnetic disk
file"**

(73) Proprietor: **International Business Machines
Corporation**
**Old Orchard Road**
**Armonk, N.Y. 10504 (US)**

(72) Inventor: **Siverling, Michael McHugh**
**519 28th Street NW.**
**Rochester Minnesota 55901 (US)**
Inventor: **Wheeler, Stephen Edward**
**2228 13th Avenue NW.**
**Rochester Minnesota 55901 (US)**

(74) Representative: **Grant, Iain Murray**
**IBM United Kingdom Patent Operations Hursley
Park**
**Winchester Hants, SO21 2JN (GB)**

Courier Press, Leamington Spa, England.

The present invention relates to enclosed self-purging disk units.

The proper functioning of a disk file, in addition to the structural integrity and uninterrupted continuity of the storage medium, requires that no outside intervention interfere with the device operation. Since the read/write transducers operate using an air bearing clearance with respect to the disk surface of 10 to 15 micro inches it is imperative that no airborne particles have a dimension equivalent to or exceeding such clearance.

The recognized need for atmospheric control within the disk enclosure has led to varying solutions, many of which result in a structure wherein more space is devoted to the filtering and air moving mechanism than to the data storage, transducing and electronic support portions. The enlarged volume within such a device creates more opportunity for airborne particles to be present and often reduces the number of air changes per unit time and thereby limits the effectiveness of particle separation.

French Patent Specification No. 2,052,505 discloses an enclosed self-purging disk unit utilizing a passive filter system pumped by rotation of the disk and comprising an enclosing shroud defining an internal annular cavity housing the disk with a pair of opposed planar inner surfaces close to and parallel with the planar surfaces of the disk and a filter duct housing a filter element and communicating with the cavity through one of the said inner surfaces, the effective centres of the duct inlet and outlet being both radially and arcuately relatively displaced with respect to the disk axis, so that the duct extends, from inlet to outlet, both in the direction of the flow caused by rotation of the disk and outwardly (from centre to periphery) of the disk. The duct is effectively U-shaped, circular cross-section pipe abutting the shroud, twice, normally to the surface through which it communicates with the cavity. What we seek is to improve the effectiveness of filtering in this general kind of system.

The present invention provides an enclosed self-purging disk unit utilizing a passage filter system pumped by rotation of the disk or disks and comprising an enclosing shroud defining an internal annular cavity housing the disk or disks with a pair of opposed planar inner surfaces close to and parallel to the outer planar surfaces of the disk or disks and a filter duct housing a filter element and communicating with the cavity through one of the said inner surfaces, the effective centres of the duct inlet and outlet being both radially and arcuately relatively displaced with respect to the disk or disks axis, so that the duct extends, from inlet to outlet, in the direction of the flow caused by rotation of the disk or disks characterized in that:

(a) the duct extends, from inlet to outlet, inwardly, i.e. from periphery to centre of the disk or disks;

(b) the edge of the aperture in the shroud facing the flow at the inlet to the duct is undercut;

(c) the edge of the aperture in the shroud backing onto the flow at the outlet from the duct is provided with a lip extending into the cavity providing a venturi-like effect at the outlet from the duct; and

(d) a counter barrier is provided on the other said inner surface opposite the outlet lipping.

In one embodiment of the present invention disclosed hereinafter, a base casting and cover cooperate to form a sealed enclosure that surrounds the motor in addition to the disk media, transducers and supporting electronics. The base and cover present shrouding surfaces that closely confront each axial side of the multi disk media to limit the volume of air within that surrounds the operative portions of the device. The shrouding surfaces are separated from the disk surface by a distance less than one-third the axial space between adjoining disks within the disk pack. The reduced volume causes a given level of filtered air to effect a greater number of air changes per unit time. A duct containing a filter is formed with inlet and outlet openings through a shroud surface and confronting the disk surface. Air flow is induced through the duct to produce a supply of filtered air at the duct outlet by the rotating disk surface with the effective central point of the duct inlet opening being a greater distance from the centre of rotation of the disk element than the effective centre of area of the duct outlet opening. The rotating disk thereby induces a higher pressure condition at the duct inlet opening and a reduced pressure at the duct outlet opening. A supplemental aspirating effect is applied to air at the duct outlet by an "air foil like" deflector that is inclined from the shroud surface toward the disk surface to increase the velocity of air passing the duct outlet and cause entrainment of air leaving the duct. To prevent interference with air flow through the duct caused by turbulent flow, the duct width between the inlet and filter is configured to initially slowly increase and thereafter rapidly increase as the filter is approached. This prevents the circular whirlpool or eddy current motion that would impede flow. To equalize the involved forces and render more effective the air flow induced in the filter duct, a barrier ridge is formed on the shroud wall surface at the opposite axial end of the pack of disk elements that is axially aligned with the ridge of the deflector that adjoints the duct outlet.

The invention provides for a sealed, minimum volume enclosed self purging disk unit using the air aspirating properties of the rotating disk elements to induce air flow through a filter duct that is a passage filter system. Limiting the enclosed volume enhances the air aspirating of the rotating disk media and increases the frequency of air changes. The duct configuration minimizes eddy current in air flowing through such filter duct and avoid propagation of turbulent air current near the disk surface that would adversely affect the flying characteristics of the magnetic transducers.

The invention will be described further by way of example with reference to an embodiment thereof as illustrated in the accompanying drawings in which:

FIG. 1 is an isometric view of the base member of one form of disk file according to the present invention with the filter duct formed as an integral part thereof;

FIG. 2 is a plan of the base member of FIG. 1;

FIG. 3 shows an exploded view of the cover and filter element that cooperates with the base member of FIGS. 1 and 2 to enclose the filter duct;

FIG. 4 is an exploded section of the cover and filter element of FIG. 3 as seen in a section through the centre of the filter by a plane normal to the major surface of the cover;

FIG. 5 is a section taken along line V—V of FIG. 3;

FIG. 6 is a section taken along line VI—VI of FIG. 3;

FIG. 7 is a section view of the base member taken along arcuate line VII—VII of FIG. 2 with the disks, duct cover, and file cover assembled thereto and shown in corresponding section; and

FIG. 8 is a section of the file memory base member taken along line VIII—VIII of FIG. 2 with the disks, motor, duct cover and file cover assembled thereto and shown in corresponding section.

The embodiment illustrated is an enclosed self-purging disk unit utilizing a passive filter system pumped by rotation of the disk pack. The enclosure is formed, essentially, by a shroud formed by a base member 10 and a cover 65.

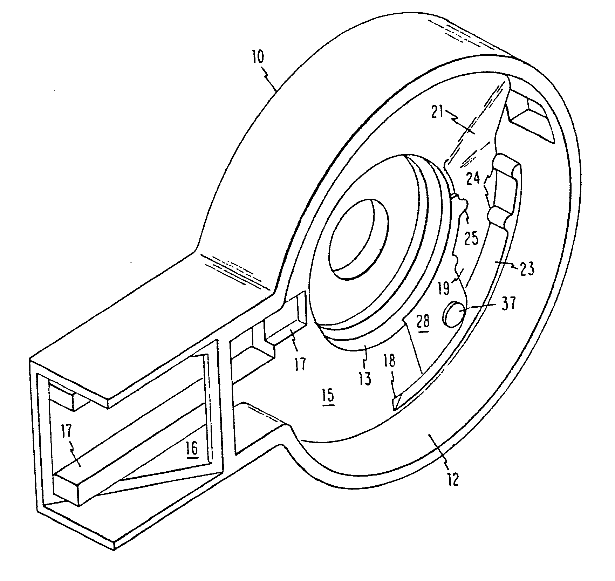

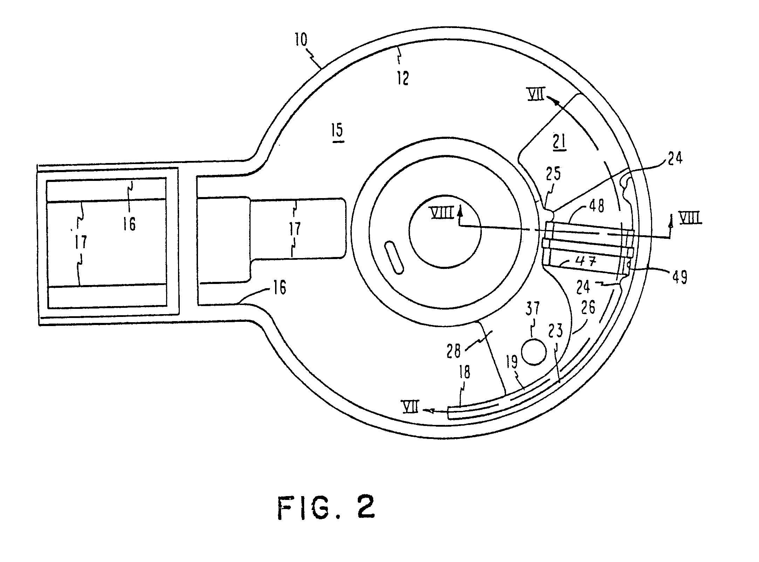

FIGS. 1 and 2 show the base member 10 for the unit, the base member including a cylindrical wall surface portion 12 that surrounds the disks and a further cylindrical recess defined by wall surface 13 in which a concentric drive motor is received. The planar minor surface 15 confronts and shrouds the disk pack at one axial side. A cylindrical surface defined by wall 12 is interrupted between wall surfaces 16. This opening and the recesses in surface 15 defined by wall portions 17 provide space for mounting transducers and permitting such transducers to access the disk surfaces. The transducers and the mounting structures therefore are not shown since they are not material to the present invention.

A duct extending in a generally circular path about the disk axis of rotation is formed as a depression the shroud surface 15. The duct that has an initial inclined surface 19 extending from shroud surface 15 to the duct floor 19 and a terminal incline surface 21 extending from duct floor surface 19 to shroud surface 15. The duct outer radial elevation surface 23 follows a generally circular path with a pair of projections 24 provided for mounting purposes. The radially inward duct sidewall 26 initially proceeds from the incline surface 18 in substantial parallelism to the outer wall 23 and thereafter rapidly diverges from the outer wall 23 to a terminal portion generally equidistant from the axis of rotation of the disk pack in the circular recess defined by the surface 12. A recessed surface 28 has a depth equal to the thickness of a cover member 30 that defines the upper wall surface of the duct and provides an upper surface 31 that is coplanar with and a continuation of the shroud surface 15.

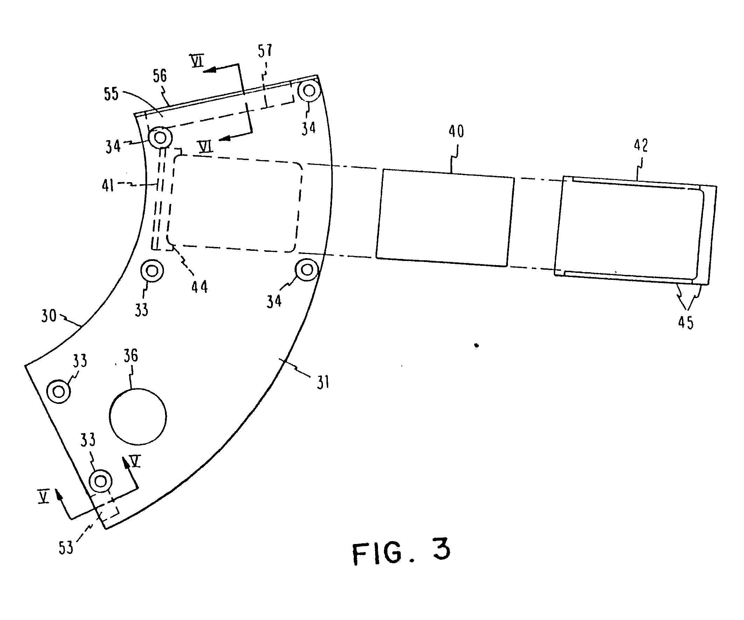

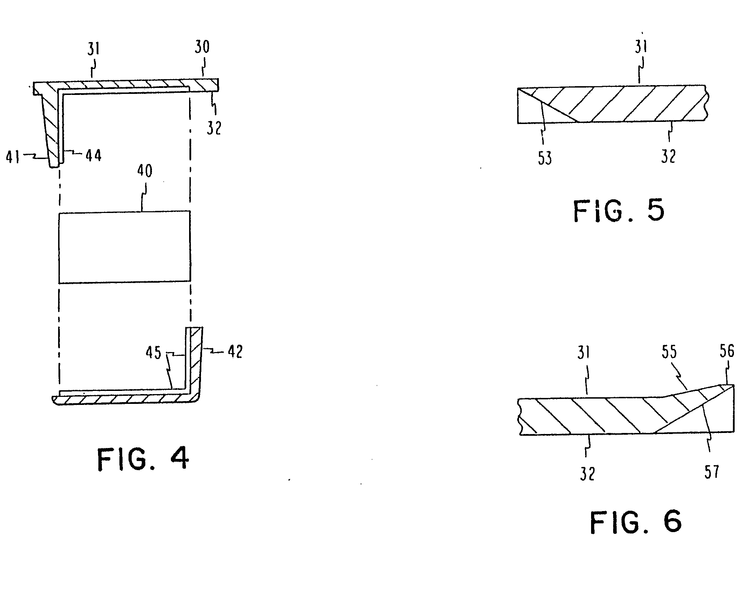

The duct cover 30 shown in FIGS. 3 and 4 is installed with the lower surface 32 abutting the base member recess surface 28 and is secured in position by six fasteners that are received in six openings 33 and 34. The fasteners extending through openings 33 are secured in the base surface 28 while the fasteners extending through openings 34 are received in the upper surface of embossments 24 and 25. The circular opening 36 in cover 30 is received about boss 37. The upper surface of boss 37 is coplanar with the shroud surface 15.

The filter element 40 is retained by a lower surface of cover 30, a flange 41 depending from and forming a part of the cover, and a retainer 42. The retainer 42 and cover 30 are bonded together with the filter positively retained by the marginal flanges 44 and 45 of cover 30 and retainer 42 respectively.

The downwardly depending filter enclosure including cover 30 with flange 41 and retainer 42 extending from the duct cover is received in the recessed portions 47, 48 and 49 found respectively in duct wall surfaces 26, 19 and 23. A length of gasket material seals the depending filtering closure within the duct and such gasket material is disposed in a continuous recess found in the three recessed wall portions 47, 48 and 49.

As seen in FIG. 5 an inclined surface 53 is formed in the cover 30 scooping the inlet to aid in deflecting air into the duct inlet. FIG. 6 illustrates the cover structure overlying the duct outlet. The surface 55 rises from the planar top surface 31 of the duct to the surface 56 which confronts the disk 60 in the assembled condition. The inclined lower surface 57 becomes a part of the duct outlet which extends to the plane of the shroud surface 15. Thus the formation defined by surfaces 55, 56, and 57 make the outlet lipped.

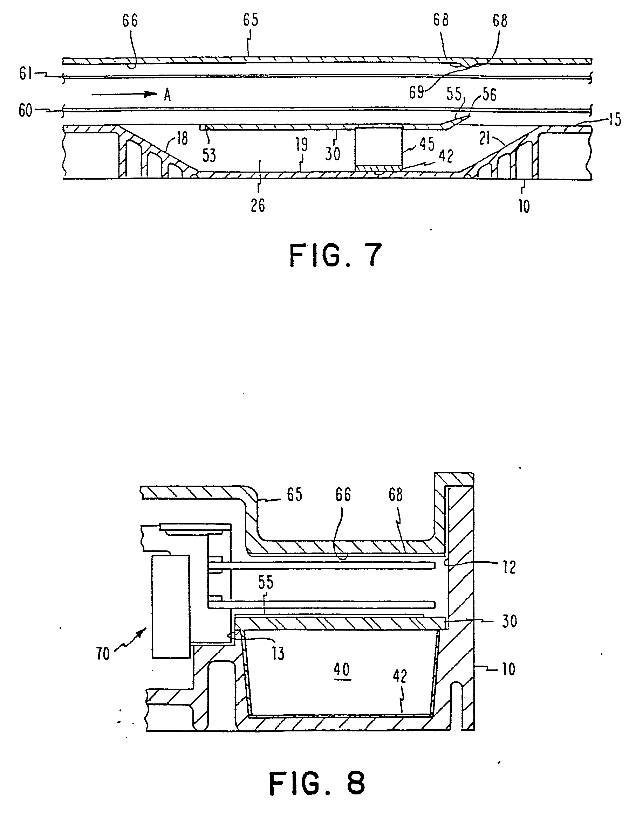

FIG. 7 illustrates, in arcuate section, the base member of FIG. 2 with the duct cover 30, disks 60, 61 and cover 65 assembled thereto. The shroud surfaces 15 and 66 presented by base member 10 and cover 65 respectively are equidistant from the confronting disk surface and closely confining to minimize the enclosed air space. The spacing between the two disk elements 60 and 61 is slightly in excess of three times the spacing between the shroud surfaces 15 and 66 and the confronting surfaces of disks 60, 61. The inclined surface 55 terminates in the surface 56 confronting the disk 60 above the duct outlet and reduces the spacing between the planes of shroud surface 15 and disk 60 by about one-half above the surface 56. The cover 65 includes a barrier that is formed by inclined surfaces 68 extending from shroud surface 66 which terminate in a surface 69. The barrier reduces the clearance between shroud surface 66 and the surface of disk 61 by about one-third.

FIG. 8 is a partial radial section of the base element 10 with the duct cover 30, filter 40, disks 60, 61, motor 70 and cover 65, some of which are in section, assembled thereto.

With the enclosure formed by the base member 10 and cover 65 surrounding the disks 60, 61 in the assembled condition, the disks are rotated in the direction of arrow A in FIG. 7 or in a counterclockwise direction with respect to the base member as viewed in FIGS. 1 and 2. The rotating disks, although presenting a very smooth highly finished surface impart a force to the enclosed ambient air which causes a pressure gradient which increases as the distance from the centre of disk rotation increases and also induces a tangential motion of the air at any given point along the disk surface.

The duct is basically a tubular structure having a varying rectangular cross section. The inlet opening overlying the inclined surface 18 has an area centre substantially further from the axis of rotation of the confronting disk than the area centre of the duct outlet openings overlying the inclined surface 21. Accordingly, the air pressure at the duct inlet is greater than the air pressure at the duct outlet during disk rotation, caused by the natural centrifugal pumping action, which induces an air flow through the duct and the filter disposed therein.

In addition the air flow induced by the pressure differential between duct inlet and duct outlet, positive aspiration assisted by the inlet scooping at 53 is provided to increase the air flow through the duct. The inclined surface 55 and the surface 56 confronting disk 60 function in the manner of an air foil to produce a venturi effect. As the clearance is reduced to that between disk 60 and surface 56 from the larger clearance between shroud surface 15 and disk 60, the speed increases and air is drawn from the duct and exhausted into the free air stream between the disk and shroud surface. A projection is formed on the upper shroud surface 66 with the inclined surfaces 68 terminating in a surface 69 which confronts the disk 61 and is axially aligned with the surface 56. This projection serves to equalize the pressure condition at each axial side of the disk pack. This is provided to introduce additional restriction to enhance aspiration and to avoid erratic disk rotation that might result from localized pressure variations occurring at one side of the disk pack.

The combination of duct air flow inducing factors afforded by the pressure differential and aspirating effect of the venturi type structure make the filtering action more effective. The closely confining shroud surface adjoining the disks not only increase the effectiveness of both the centrifugal pumping action and the aspiration of the venturi type structure, but reduction in enclosed volume causes the air flow through the filter to more frequently be the equivalent of a complete air change. The greater the number of air changes that occur per unit of time, the more secure the disk memory becomes with respect to airborne particulate matter that may be generated within the file or migrate into the fire through imperfect sealing or filtering. The reduced volume or gas enclosed about the elements of the magnetic disk memory also renders less difficult the problems associated with totally sealing the device or the filtering of air introduced as a result of ambient temperature and/or pressure variation.

It will be observed that the duct is initially of reduced continuous section with enlargement of the duct width occurring rapidly prior to the location of the filter element. Avoiding an enlarged duct cross sectional area for any significant distance prior to the filter location avoids the establishment of turbulent conditions that would cause a material pressure loss and reduce the effectiveness of the relatively small pressures that induce flow through the duct.

## Claims

1. An enclosed self-purging disk unit utilizing a passive filter system pumped by rotation of the disks and comprising an enclosing shroud (10; 65) defining an internal annular cavity housing the disk or disks (60, 61) with a pair of opposed planar inner surfaces (15; 66) close to and parallel with the outer planar surfaces of the disk or disks and a filter duct housing a filter element (40) and communicating with the cavity through one (15) of the said inner surfaces, the effective centres of the duct inlet and outlet being both radially and arcuately relatively displaced with respect to the disk or disks axis, so that the duct extends, from inlet to outlet, in the direction of the flow caused by rotation of the disk or disks characterized in that

(a) the duct extends, from inlet to outlet, inwardly i.e. from periphery to centre of the disk or disks;

(b) the edge of the aperture in the shroud facing the flow at the inlet to the duct is undercut (at 53);

(c) the edge of the aperture in the shroud backing onto the flow at the outlet from the duct is provided with a lip extending into the cavity (at 56) providing a venturi-like effect at the outlet from the duct; and

(d) a counter barrier (68; 69) is provided on the other said inner surface (66) opposite the outlet lipping.

2. A disk unit as claimed in claim 1 characterized in that the filter duct open gradually from the inlet towards the filter element, widening rapidly just prior to the filter element.

3. A disk unit as claimed in either preceding claim having plural disks in which the axial separation of the disks exceeds the separation between the two outer disk surfaces and the said inner surfaces of the shroud.

## Revendications

1. Unité à disques à boitier autofiltrant fermé, utilisant un système à filtre passif activé par la rotation des disques et comprenant un boitier de protection (10, 65) définissant un espace annulaire intérieur pour recevoir le ou les disques (60, 61) limité par deux surfaces interieures planes opposées (15, 66) disposées au voisinage et parallèlement aux surfaces planes extérieures du ou des disques et un conduit de filtrage contenant un élément de filtrage (40) et communiquant avec l'espace annulaire intérieur au travers de l'une (15) desdites surfaces intérieures, les centres effectifs des entrée et sortie du conduit étant à la fois radialement et circonférentiellement décalés par rapport à l'axe du ou des disques, de façon que le conduit soit orienté, de son entrée à sa sortie, dans le sens de l'écoulement provoqué par la rotation du ou des disques, caractérisé en ce que

(a) le conduit est orienté de son entrée à sa sortie, vers l'intérieur, c'este-à-dire de la périphérie au centre du ou des disques,

(b) le bord de l'ouverture ménagée dans le boitier face à l'écoulement, à l'entrée du conduit, est découpé (en 53),

(c) le bord de l'ouverture ménagée dans le boitier donnant par derrière sur l'écoulement à la sortie du conduit, présente une lèvre s'étendant dans l'espace annulaire intérieur (en 56) produisant un effect Venturi à la sortie du conduit, et

(d) une contre barrière (68, 69) est prévue sur la deuxième desdites surfaces intérieures (66), face à la lèvre de sortie.

2. Unité à disques selon la revendication 1 caractérisé en ce que le conduit de filtrage s'ouvre graduellement de l'entrée à l'élément de filtrage, s'élargissant rapidement juste avant l'élément de filtrage.

3. Unité à disques selon l'une quelconque des revendications précédentes, comportant plusieurs disques présentant une séparation axiale qui est plus grande que la séparation entre les surfaces des deux disques extérieurs et lesdites surfaces intérieures de boitier.

## Patentansprüche

1. Eingekapselte, selbstreinigende Platteneinheit mit einem passiven, durch Rotation der Platten pumpenden Filtersystem, und mit einer Umhüllung (10; 65) in Form eines inneren ringförmigen, die Platte oder Platten (60, 61) enthaltenden Hohlraums mit zwei sich gegenüberliegenden planaren Innenflächen (15; 66), die nahe den planaren Außenflächen der Platte oder Platten angeordnet und damit parallel sind, und mit einer Filterleitung, die ein Filterelement (40) enthält und mit dem Hohlraum durch eine (15) der Innenflächen verbunden ist, wobei die effektiven Mittelpunkte von Anfang und Ende der Leitung beide radial und bogenförmig verschoben werden in bezug auf die Achse der Platte oder Platten, so daß sich die Leitung von Anfang bis Ende in Richtung der von der Platte oder den Platten verursachten Strömung erstreckt, dadurch gekennzeichnet, daß

(a) sich die Leitung von Anfang bis Ende nach innen erstreckt, d.h. von der Peripherie zur Mitte der Platte oder Platten;

(b) die Kante der Öffnung in der Umhüllung gegenüber der Strömung am Leitungseingang unterschnitten ist (bei 53);

(c) die Kante der Öffnung in der Umhüllung mit der Rückseite zur Strömung am Leitungsausgang einen sich in den Hohlraum (bei 56) erstreckenden Vorsprung aufweist, der am Leitungsausgang einen Venturi-Effekt zur Folge hat; und

(d) an der anderen Innenfläche (66) gegenüber dem Ausgangsvorsprung. eine Gegensperre (68; 69) vorgesehen ist.

2. Platteneinheit nach Anspruch 1, dadurch gekennzeichnet, daß sich die Filterleitung allmählich vom Eingang zum Filterelement öffnet und sich kurz davor rasch verbreitert.

3. Platteneinheit nach einem der vorhergehenden Ansprüche, mit mehreren Platten, in welcher der axiale Abstand der Platten den Abstand zwischen den zwei äußeren Plattenflächen und den Innenflächen der Umhüllung überschreitet.

FIG. 2

FIG. 3

FIG. 5

FIG. 6

FIG. 4

FIG. 7

FIG. 8